(19) Europäisches Patentamt
European Patent Office
Office européen des brevets

(11) **EP 3 559 071 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(21) Anmeldenummer: **17822694.0**

(22) Anmeldetag: **22.12.2017**

(51) Int Cl.:
*C08G 18/66* (2006.01)     *C08G 18/75* (2006.01)
*C08G 18/76* (2006.01)     *C08G 18/32* (2006.01)
*C08G 18/42* (2006.01)

(86) Internationale Anmeldenummer:
**PCT/EP2017/084428**

(87) Internationale Veröffentlichungsnummer:
**WO 2018/115464 (28.06.2018 Gazette 2018/26)**

(54) **VERFAHREN ZUR HERSTELLUNG VON TRANSPARENTEN HARTEN THERMOPLASTISCHEN POLYURETHANEN**

METHOD FOR MANUFACTURING TRANSPARENT HARD THERMOPLASTIC POLYURETHANES

PROCÉDÉ DE PRODUCTION DE POLYURÉTHANES THERMOPLASTIQUES DURS TRANSPARENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2016 EP 16206699**

(43) Veröffentlichungstag der Anmeldung:
**30.10.2019 Patentblatt 2019/44**

(73) Patentinhaber: **BASF SE**
**67056 Ludwigshafen am Rhein (DE)**

(72) Erfinder:
• **TOMOVIC, Zeljko**
**49448 Lemfoerde (DE)**
• **RICHTER, Sebastian**
**49448 Lemförde (DE)**
• **SCHAEFER, Frank**
**32351 Stemwede (DE)**

(74) Vertreter: **BASF IP Association**
**BASF SE**
**GBI-C006**
**67056 Ludwigshafen (DE)**

(56) Entgegenhaltungen:
**US-A- 4 186 257**

**Beschreibung**

Die vorliegende Erfindung betrifft ein thermoplastisches Polyurethan, erhältlich oder erhalten durch Umsetzung einer Polyisocyanatzusammensetzung, eines Kettenverlängerers, und einer Polyolzusammensetzung, wobei die Polyolzusammensetzung mindestens ein Polyol (P1) umfasst, das ein Molekulargewicht Mw im Bereich von 500 bis 2000 g/Mol aufweist und mindestens einen aromatischen Polyester-Block (B1) aufweist, wobei der Hartsegmentanteil im thermoplastischen Polyurethan < 75% ist. Weiterhin betrifft die vorliegend Erfindung ein Verfahren zur Herstellung eines Formkörpers umfassend ein derartiges thermoplastisches Polyurethan sowie Formkörper, erhältlich oder erhalten gemäß einem erfindungsgemäßen Verfahren. Thermoplastische Polyurethane für verschiedene Anwendungen sind aus dem Stand der Technik grundsätzlich bekannt. Durch die Variation der Einsatzstoffe können unterschiedliche Eigenschaftsprofile erhalten werden.

US 5574092 offenbart ein steifes thermoplastisches Polyurethan mit einer Tg von mindestens 50°C, das ein Hartsegment umfasst, das auf einem Diisocyanat und einem Kettenverlängerergemisch basiert, das ein aromatisches Diol enthält. Ausweislich der Beispiele werden sehr spröde Materialien mit einer Bruchdehnung von kleiner 170 % erhalten.

Auch US 5627254 offenbart steife thermoplastische Polyurethane, umfassend Einheiten von Butandiol (BDO) und einem Polyethylenglykol (PEG) des Typs $HO-(CH_2CH_2O)_n-H$, wobei n eine ganze Zahl von 2 bis 6 ist. Diese Materialien haben den Nachteil, dass sie brüchig und schlecht zu verarbeiten sind.

WO 2015/063062 A1 betrifft thermoplastische Polyurethane erhältlich oder erhalten durch Umsetzung von mindestens einem aliphatischen Polyisocyanat, mindestens einem Kettenverlängerer, und mindestens einer Polyolzusammensetzung, wobei die Polyolzusammensetzung ein Polyol ausgewählt aus der Gruppe bestehend aus Polyetherolen und mindestens ein Bisphenol-Derivat umfasst, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist, sowie Verfahren zur Herstellung derartiger thermoplastischer Polyurethane und die Verwendung eines erfindungsgemäßen thermoplastischen Polyurethans zur Herstellung von Extrusionsprodukten, Folien und Formkörpern. Solche aliphatischen TPUs mit einer Härte von > 70 Shore D haben ein geringes E-Modul und nur eine unzureichende Bruchdehnung. Ein weiterer Nachteil ist die Verwendung von toxikologisch nicht unbedenklichem Bisphenol A

US 4186257 offenbart die Herstellung von thermoplastischen Polyurethanen, hergestellt durch Reaktion eines hochmolekularen Polyols, erhalten durch Kondensation von Terephthal/Isophthalsäureester und Alkylenglykolen mit höhermolekularen Polyolen, mit einem Polyisocyanat und einem optionalen Kettenverlängerer. Der Anteil des aromatischen Blocksegments im hochmolekularen Polyol ist dabei 40 bis 80 gew.-%. Die so erhaltenen TPUs weisen gute mechanischen Eigenschaften auch bei niedrigen Temperaturen auf.

Üblicherweise haben harte thermoplastische Polyurethane einen Hartsegmentanteil von nicht weniger als 75%, die durch Umsetzung von Isocyanaten und Kettenverlängerern wie zum Beispiel 1,6-Hexanediol oder 1,4-Cyclohexandimethanol erhalten werden. Diese Materialien weisen eine hohe Härte und hohe Dimensionsstabilität auf, sind jedoch sehr brüchig und haben nur eine Bruchdehnung von unter 200 % oder sogar unter 100%.

Für viele Anwendungen sind jedoch Materialien nötig, die neben einer hohen Härte, also insbesondere einer Härte von > 75 Shore D und einem und E-Modul von > 2000 MPa bei Raumtemperatur, auch eine gute Bruchdehnung von über 300% aufweisen.

Ausgehend vom Stand der Technik lag eine der vorliegenden Erfindung zugrunde liegende Aufgabe darin, ein thermoplastisches Polyurethan bereitzustellen, dass zum einen transparent ist und eine hohe Härte und ein hohes E-Modul aufweist, zum anderen eine sehr gute Bruchdehnung aufweist. Eine weitere Aufgabe der vorliegenden Erfindung lag darin, ein thermoplastisches Polyurethan bereitzustellen, dass zum einen transparent ist und eine hohe Härte und ein hohes E-Modul aufweist, zum anderen eine sehr gute Bruchdehnung aufweist, das einfach und kostengünstig in einem one-shot Verfahren herzustellen ist.

Erfindungsgemäß wird diese Aufgabe gelöst durch ein thermoplastisches Polyurethan, erhältlich oder erhalten durch Umsetzung von mindestens den Komponenten (i) bis (iii):

(i) eine Polyisocyanatzusammensetzung,
(ii) mindestens ein Kettenverlängerer, und
(iii) mindestens eine Polyolzusammensetzung,

wobei die Polyolzusammensetzung mindestens ein Polyol (P1) umfasst, das ein Molekulargewicht Mw im Bereich von 500 bis 2000 g/Mol aufweist und mindestens einen aromatischen Polyester-Block (B1) aufweist,
wobei der Hartsegmentanteil im thermoplastischen Polyurethan < 75% ist.

Erfindungsgemäß weist das Polyol (P1) ein Molekulargewicht Mw im Bereich von 500 bis 2000 g/Mol auf. Weiterhin weist das Polyol (P1) einen aromatischen Polyester-Block (B1) auf. Darunter wird im Rahmen der vorliegenden Erfindung verstanden, dass der aromatischen Polyester-Block (B1) ein Polyester aus einer aromatischen Dicarbonsäure und einem aliphatischen Diol sein kann oder ein Polyester aus einer aliphatischen Dicarbonsäure und einem aromatischen Diol. Vorzugsweise ist der aromatischen Polyester-Block (B1) im Rahmen der vorliegenden Erfindung ein Polyester aus einer aromatischen Dicarbonsäure und einem aliphatischen Diol. Geeignete aromatische Dicarbonsäuren sind dabei beispielsweises Terephthalsäure, Isophthalsäure oder Phthalsäure, bevorzugt Terephthalsäure. Demgemäß sind geeignete Polyole (P1) im Rahmen der vorliegenden Erfindung solche, die beispielsweise mindestens einen Polyethylenterephthalat-Block oder mindestens einen Polybutylenterephthalat-Block aufweisen, wobei die Anzahl der Wiederholungseinheiten der Aromaten mindestens 2 in Reihe ist. Vorzugsweise wird der aromatischen Polyester-Block (B1) in einem gesonderten Schritt vor der weiteren Umsetzung zu Polyol (P1) hergestellt, um eine ausreichende Blocklänge der Wiederholungseinheiten der Aromaten zu gewährleisten.

Erfindungsgemäß kann das thermoplastische Polyurethan insbesondere ein kompaktes thermoplastisches Polyurethan sein. Demgemäß betrifft die vorliegende Erfindung gemäß einer weiteren Ausführungsform ein thermoplastisches Polyurethan wie zuvor beschrieben, wobei das thermoplastische Polyurethan ein kompaktes thermoplastisches Polyurethan ist.

Gemäß einer weiteren Ausführungsform betrifft die vorliegende Erfindung demgemäß ein thermoplastisches Polyurethan wie zuvor beschrieben, wobei der aromatischen Polyester-Block (B1) ein Polyester aus einer aromatischen Dicarbonsäure und einem aliphatischen Diol ist. Gemäß einer weiteren Ausführungsform betrifft die vorliegende Erfindung auch ein thermoplastisches Polyurethan wie zuvor beschrieben, wobei der aromatische Polyester-Block (B1) ein Polyethylenterephthalat-Block oder ein Polybutylenterephthalat-Block ist. Gemäß einer weiteren bevorzugten Ausführungsform betrifft die vorliegende Erfindung weiterhin ein thermoplastisches Polyurethan wie zuvor beschrieben, wobei der aromatischen Polyester-Block (B1) ein Polyethylenterephthalat-Block ist.

Erfindungsgemäß weist das thermoplastische Polyurethan einen Hartsegmentanteil von < 75% auf. Der Hartsegmentanteil ist dabei der Anteil des thermoplastischen Polyurethans, der durch Isocyanat und Kettenverlängerer gebildet wird. Dabei wird im Rahmen der vorliegenden Erfindung der Hartsegmentanteil gemäß der in der WO 2007/118827 A1 offenbarten Formel bestimmt wobei ein Wert von 1,0 100% entspricht, d.h. ein Hartsegmentanteil von < 75% entspricht einem Wert von < 0,75 gemäß der in der WO 2007/118827 A1 angegebenen Formel.

Überraschenderweise wurde gefunden, dass durch die Verwendung von Polyolen (P1) mit einem Molekulargewicht Mw im Bereich von 500 bis 2000 g/Mol, die mindestens einen aromatischen Polyester-Block (B1) aufweisen, thermoplastische Polyurethane mit einem Hartsegmentanteil < 75% erhalten werden, die transparent sind, eine hohe Härte aufweisen und gleichzeitig nicht spröde sind. So weisen die erfindungsgemäßen thermoplastischen Polyurethane eine Härte von > 75 Shore D, ein E-Modul von > 2000 MPa bei Raumtemperatur und eine Bruchdehnung von > 300% auf.

Im Rahmen der vorliegenden Erfindung sind insbesondere solche Polyole (P1) geeignet, die auf aromatischen Polyestern basieren, wie Polybutylenterephthalat (PBT) oder Polyethylenterephthalat (PET). Vorzugsweise wird dabei zur Herstellung des Polyols (P1) der aromatische Polyester mit Dicarbonsäuren und Diolen zu gemischten aromatisch / aliphatischen Polyesterdiolen umgesetzt. Beispielsweise ist es im Rahmen der vorliegenden Erfindung möglich, den aromatischen Polyester in fester oder flüssiger Form mit Dicarbonsäuren und Diolen umzusetzen. Erfindungsgemäß weist dabei üblicherweise der eingesetzte aromatische Polyester ein höheres Molekulargewicht auf als die im Polyol (P1) enthaltenen Blöcke (B1).

Erfindungsgemäß geeignete Polyesterpolyole (P1) enthalten typischerweise 20 bis 70 Gew.-%, vorzugsweise 30 bis 60 Gew.-%, besonders bevorzugt 35 bis 55 Gew.-%, weiter bevorzugt 40 bis 50 Gew.-% der aromatischen Polyester-Blöcke (B1), jeweils bezogen auf das gesamte Polyesterpolyol (P1). Gemäß einer weiteren Ausführungsform betrifft die vorliegende Erfindung demgemäß ein thermoplastisches Polyurethan wie zuvor beschrieben, wobei das Polyol (P1) 20 bis 70 Gew.-% der aromatischen Polyester-Blöcke (B1) aufweist, bezogen auf das gesamte Polyesterpolyol (P1).

Erfindungsgemäß weist das Polyol (P1) ein Molekulargewicht Mw im Bereich von 500 bis 2000, bevorzugt im Bereich von 750 bis 1500, besonders bevorzugt im Bereich von 900 bis 1200, ganz besonders bevorzugt im Bereich von 950 bis 1050 g/Mol auf. Gemäß einer weiteren Ausführungsform betrifft die vorliegende Erfindung demgemäß ein thermoplastisches Polyurethan wie zuvor beschrieben, wobei das Polyol (P1) ein Molekulargewicht Mw im Bereich von 750 bis 1500 g/Mol aufweist.

Zur Berechnung der Molekulargewicht (Mw) wird folgende Formel verwendet, wobei es sich bei z um die Funktionalität des Polyester-polyols handelt und z = 2 ist:

$$Mw = 1000 \text{ mg/g} \cdot [(z \cdot 56{,}106 \text{ g/Mol}) / (OHZ \text{ [mg/g]})]$$

Bei der Herstellung der Polyole (P1) werden vorzugsweise aromatische Polyester wie Polybutylenterephthalat (PBT) oder Polyethylenterephthalat (PET) eingesetzt. Polyethylenterephthalat ist ein durch Polykondensation hergestellter thermoplastischer Kunststoff. Die Qualität des PET, seine physikalischen Eigenschaften, wie Zähigkeit oder Widerstandskraft, sind abhängig von der Kettenlänge. Ältere PET-Syntheseverfahren beruhen auf der Umesterung von Terephthalsäure-Dimethylester mit Ethylenglycol. Heute erfolgt die PET Synthese fast ausschließlich nur noch durch direkte Veresterung der Terephthalsäure mit Ethylenglycol. Auf gleiche Weise kann Terephthalsäure auch mit 1,4-Butandiol zu Polybutylenterephthalat (PBT) umgesetzt werden. Dieser ebenfalls thermoplastische Kunststoff ist unter Marken, wie CRASTIN® (Du-Pont), POCAN® (Lanxcess), ULTRADUR® (BASF) oder ENDURAN® und VESTODUR® (SABIC IP) erhältlich. Seine chemischen und physikalisch-technischen Eigenschaften entsprechen weitgehend denen von PET.

Erfindungsgemäß können auch aromatische Polyester wie Polybutylenterephthalat (PBT) oder Polyethylenterephthalat (PET) eingesetzt werden, die aus Recyclingprozessen gewonnen werden. So kann beispielsweise Polyethylenterephthalat in Form von Flocken eingesetzt werden, das aus Kunststoff-Recyclingprozessen erhalten wird. Derartige Materialien haben typischerweise Molekulargewichte von etwa 12000 g/Mol.

Erfindungsgemäß können geeignete Polyole (P1) auch unter Verwendung von aromatischen Polyestern wie Polybutylenterephthalat oder Polyethylenterephthalat mit höherem Molekulargewicht und Diolen durch Umesterung erhalten werden. Geeignete Reaktionsbedingungen sind dem Fachmann an sich bekannt.

Weiterhin werden bei der Herstellung der Polyole (P1) Diole mit 2 bis 10 Kohlenstoffatomen, beispielsweise Ethandiol, Propandiol, Butandiol, Pentandiol, Hexandiol oder Di- oder Triethylenglykol, insbesondere 1,4-Butandiol oder Mischungen daraus eingesetzt. Auch kurze Polyetherdiole, wie beispielsweise PTHF250 oder PTHF 650 oder ein kurzkettiges Polypropylenglykol wie ein PPG 500 können eingesetzt werden. Als Dicarbonsäuren können beispielsweise lineare oder verzweigtkettige Disäuren mit vier bis 12 Kohlenstoffatomen oder Mischungen daraus eingesetzt werden. Vorzugsweise wird Adipinsäure, Bernsteinsäure, Glutarsäure oder Sebazinsäure oder eine Mischung der genannten Säuren eingesetzt. Besonders bevorzugt ist im Rahmen der vorliegenden Erfindung Adipinsäure. Erfindungsgemäß können bei der Herstellung der Polyole (P1) auch weitere Polyesterdiole als Einsatzstoffe eingesetzt werden, beispielsweise Butandioladipat oder Ethylenadipat.

Es ist im Rahmen der vorliegenden Erfindung wesentlich, dass bei der Herstellung des thermoplastischen Polyurethans mindestens ein Kettenverlängerer und die Polyolzusammensetzung wie zuvor beschrieben eingesetzt werden.

Erfindungsgemäß kann ein Kettenverlängerer eingesetzt werden, es können jedoch auch Mischungen verschiedener Kettenverlängerer eingesetzt werden.

Als Kettenverlängerer können im Rahmen der vorliegenden Erfindung beispielsweise Verbindungen mit Hydroxyl- oder Amino-Gruppen eingesetzt werden, insbesondere mit 2 Hydroxyl- oder Amino-Gruppen. Erfindungsgemäß ist es jedoch auch möglich, dass Gemische verschiedener Verbindungen als Kettenverlängerer eingesetzt werden. Dabei ist erfindungsgemäß die mittlere Funktionalität der Mischung 2.

Erfindungsgemäß bevorzugt werden als Kettenverlängerer Verbindungen mit Hydroxylgruppen eingesetzt, insbesondere Diole. Dabei können bevorzugt aliphatische, araliphatische, aromatische und/oder cycloaliphatische Diole mit einem Molekulargewicht von 50 g/mol bis 220 g/mol eingesetzt werden. Bevorzugt sind Alkandiole mit 2 bis 10 C-Atomen im Alkylenrest, insbesondere Di-, Tri-, Tetra-, Penta-, Hexa-, Hepta-, Okta-, Nona- und/oder Dekaalkylenglykole. Für die vorliegende Erfindung sind besonders bevorzugt 1,2-Ethylenglykol, 1,3-Propandiol, 1,4-Butandiol, 1,6-Hexandiol. Auch aromatische Verbindungen wie Hydroxychinon(bis(2-hydroxyethyl))ether können eingesetzt werden.

Erfindungsgemäß können auch Verbindungen mit Amino-Gruppen eingesetzt werden, beispielsweise Diamine. Ebenso können Gemische von Diolen und Diaminen eingesetzt werden.

Bevorzugt ist der Kettenverlängerer ein Diol mit einem Molekulargewicht Mw < 220 g/mol. Erfindungsgemäß ist es möglich, dass lediglich ein Diol mit einem Molekulargewicht Mw < 220 g/mol zur Herstellung des transparenten, thermoplastischen Polyurethans eingesetzt wird.

Gemäß einer weiteren Ausführungsform werden mehr als ein Diol als Kettenverlängerer eingesetzt. Es können somit auch Mischungen von Kettenverlängerern eingesetzt werden, wobei mindestens ein Diol ein Molekulargewicht Mw < 220 g/mol aufweist. Werden mehr als ein Kettenverlängerer eingesetzt, so kann das zweite oder weitere Kettenverlängerer auch ein Molekulargewicht ≥ 220 g/mol aufweisen.

Gemäß einer weiteren Ausführungsform ist der Kettenverlängerer ausgewählt aus der Gruppe bestehend aus 1,4-Butandiol und 1,6-Hexandiol.

Gemäß einer weiteren Ausführungsform betrifft die vorliegende Erfindung demgemäß ein thermoplastisches Polyurethan wie zuvor beschrieben, wobei der gemäß (ii) eingesetzte Kettenverlängerer ein Diol mit einem Molekulargewicht Mw < 220 g/mol ist.

Der Kettenverlängerer, insbesondere das Diol mit einem Molekulargewicht Mw < 220 g/mol, wird vorzugsweise in einem molaren Verhältnis im Bereich von 40:1 bis 1:10 zu dem Polyol (P1) eingesetzt. Bevorzugt werden der Kettenverlängerer und das Polyol (P1) in einem molaren Verhältnis im Bereich von 20:1 bis 1:9 eingesetzt, weiter bevorzugt im Bereich von 10:1 bis 1:8, beispielsweise im Bereich von 5:1 bis 1:5, oder auch im Bereich von 4:1 bis 1:4, weiter bevorzugt im Bereich von 3:1 bis 1:2.

Gemäß einer weiteren Ausführungsform betrifft die vorliegende Erfindung demgemäß ein thermoplastisches Polyurethan wie zuvor beschrieben, wobei der gemäß (ii) eingesetzte Kettenverlängerer und das in der Polyolzusammensetzung enthaltene Polyol (P1) in einem molaren Verhältnis von 40 zu 1 bis 1 zu 10 eingesetzt werden.

Erfindungsgemäß kann die Polyolzusammensetzung neben dem mindestens einen Polyol (P1) weitere Polyole enthalten. Dementsprechend können im Rahmen der vorliegenden Erfindung auch mindestens ein Kettenverlängerer und eine Polyolzusammensetzung umfassend mindestens ein Polyol (P1) wie zuvor beschrieben und mindestens ein weiteres Polyol eingesetzt werden.

Gemäß einer weiteren Ausführungsform betrifft die vorliegende Erfindung demgemäß ein thermoplastisches Polyurethan wie zuvor beschrieben, wobei die Polyolzusammensetzung ein weiteres Polyol ausgewählt aus der Gruppe bestehend aus Polyetherolen, Polyesterolen, Polycarbonatalkoholen und Hybridpolyolen umfasst.

Als höhermolekulare Verbindungen mit gegenüber Isocyanaten reaktiven Wasserstoffatomen können die allgemein bekannten Polyole mit gegenüber Isocyanaten reaktiven Verbindungen eingesetzt werden.

Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden Polyesterole oder Polyetherole als Polyole eingesetzt. Besonders bevorzugt sind Polyesterpolyole. Ebenso können Polycarbonate eingesetzt werden. Auch Copolymere können im Rahmen der vorliegenden Erfindung eingesetzt werden. Das zahlenmittlere Molekulargewicht der erfindungsgemäß eingesetzten Polyole liegen vorzugsweise zwischen $0{,}5 \times 10^3$ g/mol und $8 \times 10^3$ g/mol, bevorzugt zwischen $0{,}6 \times 10^3$ g/mol und $5 \times 10^3$ g/mol, insbesondere zwischen $0{,}8 \times 10^3$ g/mol und $3 \times 10^3$ g/mol.

Bevorzugt besitzen sie eine mittlere Funktionalität gegenüber Isocyanaten von 1,8 bis 2,3, besonders bevorzugt 1,9 bis 2,2, insbesondere 2.

Als Polyesterole können Polyesterole auf Basis von Disäuren und Diolen eingesetzt werden. Als Diole werden vorzugsweise Diole mit 2 bis 10 Kohlenstoffatomen, beispielsweise Ethandiol, Propandiol, Butandiol, Pentandiol, Hexandiol oder Di- oder Triethylenglykol, insbesondere 1,4-Butandiol oder Mischungen daraus eingesetzt. Als Disäuren können alle bekannten Disäuren eingesetzt werden, beispielsweise lineare oder verzweigtkettige Disäuren mit vier bis 12 Kohlenstoffatomen oder Mischungen daraus. Vorzugsweise wird Adipinsäure als Disäure eingesetzt.

Bevorzugte Polyetherole sind erfindungsgemäß Polyethylenglykole, Polypropylenglykole und Polytetrahydrofurane.

Gemäß einer besonders bevorzugten Ausführungsform ist das Polyol ein Polytetrahydrofuran (PTHF) mit einem Molekulargewicht im Mw Bereich von 600 g/mol bis 2500 g/mol.

Erfindungsgemäß sind neben PTHF diverse weitere Polyether geeignet, aber auch Polyester, Blockcopolymere sowie Hybrid Polyole wie z.B. Poly(ester/amid) verwendbar.

Bevorzugt haben die eingesetzten Polyole eine mittlerer Funktionalität zwischen 1,8 und 2,3, bevorzugt zwischen 1,9 und 2,2, insbesondere 2. Bevorzugt weisen die erfindungsgemäß eingesetzten Polyole nur primäre Hydroxylgruppen auf.

Erfindungsgemäß kann das Polyol in reiner Form oder in Form einer Zusammensetzung enthaltend das Polyol und mindestens ein Lösungsmittel eingesetzt werden. Geeignete Lösungsmittel sind dem Fachmann an sich bekannt.

Das zusätzliche Polyol wird vorzugsweise in einem molaren Verhältnis im Bereich von 10:1 bis 1:10 zu dem Polyol (P1) eingesetzt wird. In weiter bevorzugten Ausführungsformen werden das weitere Polyol und das Polyol (P1) in einem molaren Verhältnis im Bereich von 9:1 bis 1:9 eingesetzt, weiter bevorzugt im Bereich von 5:1 bis 1:5.

Erfindungsgemäß wird mindestens ein Polyisocyanat eingesetzt. Erfindungsgemäß können auch Mischungen aus zwei oder mehr Polyisocyanaten eingesetzt werden.

Bevorzugte Polyisocyanate sind im Rahmen der vorliegenden Erfindung Diisocyanate, insbesondere aliphatische oder aromatische Diisocyanate, weiter bevorzugt aromatische Diisocyanate.

Gemäß einer weiteren Ausführungsform betrifft die vorliegende Erfindung demgemäß ein thermoplastisches Polyurethan wie zuvor beschrieben, wobei das Polyisocyanat ein aliphatisches oder aromatisches Diisocyanat ist.

Erfindungsgemäß erfolgt die Umsetzung der Komponenten in einem Verhältnis, so dass der Hartsegmentanteil im thermoplastischen Polyurethan < 75% ist, vorzugsweise < 70%, weiter bevorzugt < 50%, besonders bevorzugt < 40%. Der Hartsegmentanteil im thermoplastischen Polyurethan liegt damit bevorzugt im Bereich von 10 bis 75%, vorzugsweise im Bereich von 20 bis 70%, weiter bevorzugt im Bereich von 20 bis 50%, besonders bevorzugt im Bereich von 20 bis 40%.

Des Weiteren können im Rahmen der vorliegenden Erfindung vorreagierte Prepolymere als Isocyanatkomponenten eingesetzt werden, bei denen ein Teil der OH-Komponenten in einem vorgelagerten Reaktionsschritt mit einem Isocyanat zur Reaktion gebracht werden. Diese Prepolymere werden in einem nachfolgenden Schritt, der eigentlichen Polymerreaktion, mit den restlichen OH-Komponenten zur Reaktion gebracht und bilden dann das thermoplastische Polyurethan. Die Verwendung von Prepolymeren bietet die Möglichkeit, auch OH-Komponenten mit sekundären Alkoholgruppen zu verwenden.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'-und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI); insbesondere bevorzugt sind 4,4'-, 2,4'- und/oder 2,2'-Methylendicyclohexyldiisocyanat (H12MDI) und 1-Isocyanato-3,3,5-trimethyl-5-isocyanatomethyl-cyclohexan oder Mischungen davon.

Demgemäß betrifft die vorliegende Erfindung gemäß einer weiteren Ausführungsform ein wie zuvor beschriebenes Verfahren, wobei das Polyisocyanat ausgewählt ist aus der Gruppe bestehend aus 4,4'-, 2,4'- und/oder 2,2'-Methylendicyclohexyldiisocyanat (H12MDI), Hexamethylendiisocyanat (HDI) und 1-Isocyanato-3,3,5-trimethyl-5-isocyanatomethyl-cyclohexan (IPDI) oder Mischungen davon.

Geeignete aromatische Diisocyanate sind insbesondere 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethan-diisocyanat und/oder Phenylendiisocyanat.

Bevorzugte aromatische Diisocyanate sind 2,2'-, 2,4'- und/oder 4,4'-Diphenylmethandiisocyanat (MDI) und deren Mischungen.

Bevorzugte Beispiele für höherfunktionelle Isocyanate sind Triisocyanate, z. B. Triphenylmethan-4,4',4"-triisocyant, weiterhin die Cyanurate der vorgenannten Diisocyanate, sowie die durch partielle Umsetzung von Diisocyanaten mit Wasser erhältlichen Oligomere, z. B. die Biurete der vorgenannten Diisocyanate, ferner Oligomere, die durch gezielte Umsetzung von semiblockierten Diisocyanaten mit Polyolen, die im Mittel mehr als 2 und vorzugsweise 3 oder mehr Hydroxy-Gruppen aufweisen, erhältlich sind.

Gemäß einer weiteren Ausführungsform betrifft die vorliegende Erfindung ein wie zuvor beschriebenes Verfahren, wobei das Polyisocyanat ein aliphatisches Diisocyanat ist.

Erfindungsgemäß kann das Polyisocyanat in reiner Form oder in Form einer Zusammensetzung enthaltend das Polyisocyanat und mindestens ein Lösungsmittel eingesetzt werden. Geeignete Lösungsmittel sind dem Fachmann bekannt. Geeignet sind beispielsweise nicht reaktive Lösungsmittel wie Ethylacetat, Methylethylketon, Tetrahydrofuran und Kohlenwasserstoffe.

Erfindungsgemäß können bei der Umsetzung von dem mindestens einen aliphatischen Polyisocyanat, dem mindestens einen Kettenverlängerer, und der mindestens einen Polyolzusammensetzung weitere Einsatzstoffe zugesetzt werden, beispielsweise Katalysatoren oder Hilfs- und Zusatzstoffe.

Geeignete Hilfs- und Zusatzstoffe sind dem Fachmann an sich bekannt. Genannt seien beispielsweise oberflächenaktive Substanzen, Flammschutzmittel, Keimbildungsmittel, Oxidationsstabilisatoren, Antioxidantien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S103-113) entnommen werden.

Geeignete Katalysatoren sind ebenfalls grundsätzlich aus dem Stand der Technik bekannt. Geeignete Katalysatoren sind beispielsweise organische Metallverbindungen ausgewählt aus der Gruppe bestehend aus Zinn-, Titan-, Zirkonium-, Hafnium-, Bismut-, Zink-, Aluminium- und Eisenorganylen, wie beispielsweise Zinnorganylverbindungen, bevorzugt Zinndialkyle wie Zinn-II-isooctoat, Zinndioctoat, Dimethylzinn oder Diethylzinn, oder Zinnorganylverbindungen aliphatischer Carbonsäuren, bevorzugt Zinndiacetat, Zinndilaurat, Dibutylzinndiacetat, Dibutylzinndilaurat, Titansäureester, Bismutverbindungen, wie Bismutalkylverbindungen, bevorzugt Bismutneodecanoat oder ähnliche, oder Eisenverbindungen, bevorzugt Eisen-(III)-acetylacetonat.

Gemäß einer bevorzugten Ausführungsform werden die Katalysatoren ausgewählt aus Zinnverbindungen und Bismutverbindungen, weiter bevorzugt Zinnalkylverbindungen oder Bismutalkylverbindungen. Besonders geeignet sind die Zinn-II-isooctoat und Bismutneodecanoat.

Die Katalysatoren werden üblicherweise in Mengen von 3 ppm bis 2000 ppm, bevorzugt 10 ppm bis 1000 ppm, weiter bevorzugt 20 ppm bis 500 ppm und am meisten bevorzugt von 30 ppm bis 300 ppm eingesetzt.

Gemäß einem weiteren Aspekt betrifft die vorliegende Erfindung auch ein Verfahren zur Herstellung eines Formkörpers (FK) umfassend die folgenden Schritte:

(a) Herstellung eines thermoplastischen Polyurethans umfassend die Umsetzung

(i) mindestens einer Polyisocyanatzusammensetzung;
(ii) mindestens eines Kettenverlängerers; und

(iii) mindestens einer Polyolzusammensetzung,

wobei die Polyolzusammensetzung mindestens ein Polyol (P1) umfasst, das ein Molekulargewicht Mw im Bereich von 500 bis 2000 g/Mol aufweist und mindestens einen aromatischen Polyester-Block (B1) aufweist,

wobei der Hartsegmentanteil im thermoplastischen Polyurethan < 75% ist;

(b) Herstellung eines Formkörpers (FK) aus dem thermoplastischen Polyurethan.

Das erfindungsgemäße Verfahren umfasst die Schritte (a) und (b). Dabei wird zunächst gemäß Schritt (a) ein thermoplastisches Polyurethan durch Umsetzung mindestens einer Polyisocyanatzusammensetzung, mindestens eines Kettenverlängerers und mindestens einer Polyolzusammensetzung hergestellt. Dabei umfasst die Polyolzusammensetzung erfindungsgemäß mindestens ein Polyol (P1), das ein Molekulargewicht Mw im Bereich von 500 bis 2000 g/Mol aufweist und mindestens einen aromatischen Polyester-Block (B1) aufweist.

Gemäß Schritt (b) wird aus dem gemäß Schritt (a) erhaltenen thermoplastischen Polyurethan ein Formkörper (FK) hergestellt. Der Formkörper (FK) kann dabei im Rahmen der vorliegenden Erfindung beispielsweise auch eine Folie sein. Dabei kann die Herstellung des Formkörpers (FK) im Rahmen der vorliegenden Erfindung auf alle üblichen Arten erfolgen, beispielsweise durch Extrusion, Spritzguss, Sinterverfahren oder aus Lösung. Insbesondere die Herstellung des Formkörpers (FK) durch Spritzguss ist im Rahmen der vorliegenden Erfindung bevorzugt.

Gemäß einer weiteren Ausführungsform betrifft die vorliegende Erfindung demgemäß ein Verfahren wie zuvor beschrieben, wobei der Formkörper (FK) in Schritt (b) mittels Extrusion, Spritzguss, Sinterverfahren oder aus Lösung hergestellt wird.

Das Verfahren gemäß Schritt (a) kann prinzipiell unter an sich bekannten Reaktionsbedingungen durchgeführt werden.

Gemäß einer bevorzugten Ausführungsform wird das Verfahren gemäß Schritt (a) unter erhöhten Temperaturen als Raumtemperatur durchgeführt, weiter bevorzugt im Bereich zwischen 50 °C und 200 °C, besonders bevorzugt im Bereich von 55 °C und 150 °C, insbesondere im Bereich von 60 °C und 120 °C.

Das Erwärmen kann erfindungsgemäß auf jede dem Fachmann bekannte geeignete Art erfolgen. Vorzugsweise durch elektrisches Beheizen, Beheizen über erhitztes Öl, erhitze Polymerflüssigkeiten oder Wasser, Induktionsfelder, Warmluft oder IR-Strahlung.

Die erhaltenen thermoplastischen Polyurethane werden erfindungsgemäß zu einem Formkörper (FK) verarbeitet. Das Verfahren umfasst demgemäß Schritt (a) und Schritt (b). Erfindungsgemäß kann das Verfahren weitere Schritte, beispielsweise Temperaturbehandlungen, umfassen.

Mit dem erfindungsgemäßen Verfahren wird ein Formkörper (FK) erhalten, die transparent sind, eine hohe Härte aufweisen und gleichzeitig nicht spröde sind. Gemäß einem weiteren Aspekt betrifft die vorliegende Erfindung auch Formkörper, erhältlich oder erhalten gemäß einem Verfahren wie zuvor beschrieben.

Prinzipiell kann es sich bei dem Formkörper (FK) um Körper aller möglichen Formen handeln, beispielsweise Extrusionsprodukte wie Folien und andere Formkörper. Erfindungsgemäß kann es sich bei dem Formkörper insbesondere um Gebrauchsartikel, beispielsweise für Anwendungen wie Zahnbürsten, Rasierer, Gehäuse für Haushaltsartikel, Displays, Teile von Computern oder Telefonen, Stecker, Teile für den Automobilinnenausbau, Teile von Schuhen, beispielsweise Kappen für Sicherheitschuhe, handeln.

Gemäß einer weiteren Ausführungsform betrifft die vorliegende Erfindung demgemäß einen Formkörper wie zuvor beschrieben, wobei der Formkörper ein Gebrauchsartikel, beispielsweise für Anwendungen wie Zahnbürsten, Rasierer, Gehäuse für Haushaltsartikel, Displays, Teile von Computern oder Telefonen, Stecker, ein Teil für den Automobilinnenausbau, ein Teil von Schuhen, beispielsweise eine Kappe für Sicherheitschuhe, ist.

Die nachfolgenden Beispiele dienen der Veranschaulichung der Erfindung, sind aber in keiner Weise einschränkend hinsichtlich des Gegenstands der vorliegenden Erfindung.

BEISPIELE

**1 Folgende Einsatzstoffe wurden eingesetzt:**

| | |
|---|---|
| Polyol 1: | Polyesterpolyol auf Basis Adipinsäure, PET, 1,4-Butandiol und Diethylenglykol mit einer OH-Zahl von 111,2, Funktionalität: 2 |
| Polyol 2: | Polyesterpolyol auf Basis Adipinsäure, PET, 1,4-Butandiol und Diethylenglykol mit einer OH-Zahl von 112,8, Funktionalität: 2 |

| Polyol 3: | Polyesterpolyol auf Basis Adipinsäure, PET, 1,4-Butandiol und 1,3-Propandiol mit einer OH-Zahl von 112,1, Funktionalität: 2 |
| Polyol 4: | Polyesterpolyol auf Basis Adipinsäure, Bernsteinsäure, Glutarsäure, PET und Diethylenglykol und einer OH-Zahl von 75,6 und Funktionalität: 2 |
| Polyol 5: | Polyesterpolyol auf Basis Adipinsäure, Bernsteinsäure, Glutarsäure, PET und Diethylenglykol und einer OH-Zahl von 110,6 und Funktionalität: 2 |
| PET | Polyethylenterephthalat in Form von Flocken mit einem mittleren Molekulargewicht Mw von 12000 g/mol |
| Isocyanat 1: | aromatisches Isocyanat (4,4' Methylendiphenyldiisocyanat) |
| Isocyanat 2: | aliphatisches Isocyanat (4,4' Methylendicyclohexyldiisocyanat) |
| KV 1: | 1,4-Butandiol |
| KV 2: | 1,6-Hexandiol |
| Stabilisator 1: | Hydrolysestabilisator auf der Basis von Polycarbodiimid |
| Katalysator 1: | 50% Zinn-II-isooctoat in Diethylhexyladipat |

**2 Synthese der Polyester Polyole mit PET Blöcken**

2.1 Synthese von Polyol 1

Einem 4000 ml Rundhalskolben versehen mit Thermoelement PT100, Stickstoffeinleitung, Rührer, Kolonne, Kolonnenkopf, Anschütz-Thiele-Aufsatz und Heizpilz werden zunächst 880,84 g Adipinsäure, 395,56 g 1,4-Butandiol und 465,79g Diethylenglykol zugefügt. Das Gemisch wird anschließend auf 120 °C erhitzt bis eine homogene Mischung entsteht. Zum Gemisch werden nun 1000 g Polyethylenterephthalat (PET) in Form von PET Flocken und anschließend 10ppm=2,5g TTB (Tetra-n-butylorthotitant 1%-ig in Toluol) hinzugegeben. Die Reaktionsmischung wird zunächst für ca.1,5 Std. auf 180°C und danach weiter auf 240 °C erhitzt und das entstehende Reaktionswasser wird kontinuierlich entfernt. Während der gesamten Synthese werden die PET Flocken langsam abgebaut und es entsteht ein transparentes Gemisch, welches so lange kondensiert wird, bis ein Produkt mit einer Säurezahl <1.0 mg KOH/g erhalten wird.
Das erhaltene Polymer weist folgende Eigenschaften auf

Hydroxylzahl: 111,2 mg KOH/g
Säurezahl: 0,45 mg KOH/g
Viskosität bei 75 °C: 757 mPas

2.2 Synthese von Polyol 2

Einem 4000 ml Rundhalskolben versehen mit Thermoelement PT100, Stickstoffeinleitung, Rührer, Kolonne, Kolonnenkopf, Anschütz-Thiele-Aufsatz und Heizpilz werden zunächst 705,39 g Adipinsäure, 339,84 g 1,4-Butandiol und 400,18 g Diethylenglykol zugefügt. Das Gemisch wird anschließend auf 120 °C erhitzt bis eine homogene Mischung entsteht. Zum Gemisch werden nun 1250 g Polyethylenterephthalat (PET) in Form von PET Flocken und anschließend 10ppm=2,5g TTB (Tetra-n-butylorthotitant 1%-ig in Toluol) hinzugegeben. Die Reaktionsmischung wird zunächst für ca.1,5 Std. auf 180°C und danach weiter auf 240 °C erhitzt und das entstehende Reaktionswasser wird kontinuierlich entfernt. Während der gesamten Synthese werden die PET Flocken langsam abgebaut und es entsteht ein transparentes Gemisch, welches so lange kondensiert wird, bis ein Produkt mit einer Säurezahl <1.0 mg KOH/g erhalten wird.
Das erhaltene Polymer weist folgende Eigenschaften auf

Hydroxylzahl: 112,8 mg KOH/g
Säurezahl: 0,55 mg KOH/g
Viskosität bei 75 °C: 1388 mPas

2.3 Synthese von Polyol 3

Einem 4000 ml Rundhalskolben versehen mit Thermoelement PT100, Stickstoffeinleitung, Rührer, Kolonne, Kolonnenkopf, Anschütz-Thiele-Aufsatz und Heizpilz werden zunächst 788,52 g Adipinsäure, 309,27 g Propandiol 1,3 und 366,24 g 1,4-Butandiol zugefügt. Das Gemisch wird anschließend auf 120 °C erhitzt bis eine homogene Mischung entsteht. Zum Gemisch werden nun 1250 g Polyethylenterephthalat (PET) in Form von PET Flocken und anschließend 10ppm=2,5g TTB (Tetra-n-butylorthotitant 1%-ig in Toluol) hinzugegeben. Die Reaktionsmischung wird zunächst für ca.1,5 Std. auf 180°C und danach weiter auf 240 °C erhitzt und das entstehende Reaktionswasser wird kontinuierlich entfernt. Während der gesamten Synthese werden die PET Flocken langsam abgebaut und es entsteht ein transparentes Gemisch, welches so lange kondensiert wird, bis ein Produkt mit einer Säurezahl <1.0 mg KOH/g erhalten wird.

Das erhaltene Polymer weist folgende Eigenschaften auf

Hydroxylzahl: 112,1 mg KOH/g
Säurezahl: 0,38 mg KOH/g
Viskosität bei 75 °C: 1803 mPas

2.4 Synthese von Polyol 4

Einem 3000 ml Rundhalskolben versehen mit Thermometer, Stickstoffeinleitung, Rührer und Heizpilz werden zunächst 819,5 g Dicarbonsäuregemisch (bestehend aus Adipinsäure, Glutarsäure und Bernsteinsäure) und 925,9 g Diethylenglykol zugefügt. Das Gemisch wird anschließend auf 120 °C erhitzt bis eine homogene Mischung entsteht. Zum Gemisch werden nun 1000 g Polyethylenterephthalat (PET) in Form von PET Flocken hinzugegeben. Die Reaktionsmischung wird weiter auf 240 °C erhitzt und das entstehende Reaktionswasser kontinuierlich entfernt. Währen der gesamten Synthese werden die PET Flocken langsam abgebaut und es entsteht ein transparentes Gemisch, welches so lange kondensiert wird, bis ein Produkt mit einer Säurezahl <1.0 mg KOH/g erhalten wird.

Das erhaltene Polymer weist folgende Eigenschaften auf

| | |
|---|---|
| Säurezahl: | 110,6 mg KOH/g |
| Hydroxylzahl: | 0,6 mg KOH/g |
| Viskosität bei 75 °C: | 660 mPas |

2.5 Synthese von Polyol 5

Einem 3000 ml Rundhalskolben versehen mit Thermometer, Stickstoffeinleitung, Rührer und Heizpilz werden zunächst 1040,9 g Dicarbonsäuregemisch (bestehend aus Adipinsäure, Glutarsäure und Bernsteinsäure) und 1016,2 g Diethylenglykol zugefügt. Das Gemisch wird anschließend auf 120 °C erhitzt bis eine homogene Mischung entsteht. Zum Gemisch werden nun 750 g Polyethylenterephthalat (PET) in Form von PET Flocken hinzugegeben. Die Reaktionsmischung wird weiter auf 240 °C erhitzt und das entstehende Reaktionswasser kontinuierlich entfernt. Währen der gesamten Synthese werden die PET Flocken langsam abgebaut und es entsteht ein transparentes Gemisch, welches so lange kondensiert wird, bis ein Produkt mit einer Säurezahl <1.0 mg KOH/g erhalten wird.

Das erhaltene Polymer weist folgende Eigenschaften auf

| | |
|---|---|
| Säurezahl: | 75,6 mg KOH/g |
| Hydroxylzahl: | 0,7 mg KOH/g |
| Viskosität bei 75 °C: | 840 mPas |

**3 Methoden**

3.1 Viskositätsbestimmung:

Die Viskosität der Polyole wurde, wenn nicht anders angegeben, bei 75 °C gemäß DIN EN ISO 3219 (Ausgabe 01.10.1994) mit einem Rotationsviskosimeter Rheotec RC 20 unter Verwendung der Spindel CC 25 DIN (Spindel-Durchmesser: 12,5 mm; Messzylinder-Innendurchmesser: 13,56 mm) bei einer Scherrate von 50 1/s bestimmt.

3.2 Messung der Hydroxylzahl:

Die Hydroxylzahlen wurden nach der Phthalsäureanhydrid-Methode DIN 53240 (Ausgabe: 01.12.1971) bestimmt und in mg KOH/g angegeben.

3.3 Messung der Säurezahl:

Die Säurezahl wurde nach DIN EN 1241 (Ausgabe: 01.05.1998) bestimmt und ist in mg KOH/g angegeben.

**4 Allgemeines Herstellbeispiel**

Die Polyole wurden bei 60-80 °C in einem Behälter vorgelegt und mit den Komponenten gemäß Tabelle 1 unter starkem Rühren vermischt. Die Reaktionsmischung erhitzte sich auf über 80 °C und wurde dann auf einen beheizten, teflonbeschichteten Tisch ausgegossen. Die erhaltene Gießschwarte wurde 15 Stunden bei 80 °C getempert, anschließend granuliert und im Spritzguss verarbeitet.

Tabelle 1: Eingesetzte Beispielverbindungen

|  | Vergleich 1 | Beispiel 1 | Beispiel 2 | Beispiel 3 | Beispiel 4 | Beispiel 5 |
|---|---|---|---|---|---|---|
| Polyol 1 [g] |  | 650 |  |  |  |  |
| Polyol 2 [g] |  |  | 750 |  |  |  |
| Polyol 3 [g] |  |  |  | 750 |  |  |
| Polyol 4 [g] |  |  |  |  | 750 |  |
| Polyol 5 [g] |  |  |  |  |  | 520 |
| KV 1 [g] |  | 143,2 | 102,5 | 105 | 165 | 234,7 |
| KV 2 [g] | 472,25 |  |  |  |  |  |
| Isocyanat 1 [g] | 1000 | 562 | 476,8 | 506,8 | 646,2 |  |
| Isocyanat 2 [g] |  |  |  |  |  | 777,2 |
| Stabilisator 1 [g] |  | 6,5 | 7,5 | 7,5 | 6 | 4,2 |
| Katalysator 1 [μl] |  |  |  |  |  | 614 |
|  |  |  |  |  |  |  |
| Kennzahl | 1000 | 1000 | 1000 | 1000 | 1000 | 1000 |
| Hartsegmentgehalt | 100 % | 40 % | 29,2 % | 29,2 % | 40 % | 60 % |
| Starttemperatur | 70 °C | 60 °C | 60 °C | 70 °C | 60 °C | 80 °C |
| Abgusstemperatur | 110 °C | 100 °C | 100 °C | 100 °C | 80 °C | 110 °C |

**5 Mechanische Eigenschaften**

Die in Tabelle 2 zusammengestellten Messwerte wurden von Spritzgussplatten der Beispiele 1 bis 5 erstellt.
Die folgenden Eigenschaften der erhaltenen Polyurethane wurden nach den genannten Verfahren bestimmt:

| Härte: | DIN ISO 7619-1 |
|---|---|
| Zugfestigkeit und Reißdehnung: | DIN 53504 |
| Weiterreißwiderstand : | DIN ISO 34-1, B (b) |
| E-Modul: | DIN EN ISO 527 |
| Abriebmessung: | DIN ISO 4649 |

Tabelle 2: Mechanische Eigenschaften der Beispiele 1 bis 5 und Vergleichsbeispiel 1

|  | Shore Härte | Reißdehnung [%] | Weitereißfestigkeit [kN/m] | Abrieb [mm$^3$] | E-Modul [MPa] |
|---|---|---|---|---|---|
| Vergleich 1 | 81 D | 190 | 273 | 106 | 2229 |
| Beispiel 1 | 80 D | 320 | 274 | 52 | 2038 |
| Beispiel 2 | 76 D | 410 | 268 | 56 | 2043 |
| Beispiel 3 | 78 D | 330 | 279 | 68 | 3966 |
| Beispiel 4 | 80 D | 390 | 266 | 64 | 2026 |
| Beispiel 5 | 79 D | 340 | 215 | n.m. | 2144 |

In Gegenwart der PET-Polyole kann der Hartsegmentanteil (Isocyanat und Kettenverlängerer) reduziert werden, und trotzdem wurden hohe Härten von > 75 Shore D und gleichzeitig eine Bruchdehnung von > 300% erreicht werden. Die gemäß den Beispielen 1 bis 5 erhaltenen Materialien sind alle transparent. Die Beispiele belegen, dass besonders gute Eigenschaften bei einem PET Gehalt im Bereich von 40 bis 50% und einem mittleren Molekulargewicht Mw der Polyole von etwa 1000 g/mol erreicht werden.

**Zitierte Literatur**

US 5574092
US 5627254
WO 2015/063062 A1
WO 2007/118827 A1
Kunststoffhandbuch, Band 7, "Polyurethane", Carl Hanser Verlag, 3. Auflage 1993, Kapitel 3.1
Kunststoffhandbuch, Band 7, Carl Hanser Verlag, 1. Auflage 1966, S. 103-113

**Patentansprüche**

1. Thermoplastisches Polyurethan, erhältlich oder erhalten durch Umsetzung von mindestens den Komponenten (i) bis (iii):

   (i) eine Polyisocyanatzusammensetzung,
   (ii) mindestens ein Kettenverlängerer, und
   (iii) mindestens eine Polyolzusammensetzung,

   wobei die Polyolzusammensetzung mindestens ein Polyol (P1) umfasst, das ein Molekulargewicht Mw im Bereich von 500 bis 2000 g/Mol aufweist und mindestens einen aromatischen Polyester-Block (B1) aufweist,
   wobei der Hartsegmentanteil im thermoplastischen Polyurethan < 75% ist.

2. Thermoplastisches Polyurethan gemäß Anspruch 1, wobei das Polyol (P1) 20 bis 70 Gew.-% der aromatischen Polyester-Blöcke (B1) aufweist, bezogen auf das gesamte Polyesterpolyol (P1).

3. Thermoplastisches Polyurethan gemäß Anspruch 1 oder 2, wobei der aromatische Polyester-Block (B1) ein Polyester aus einer aromatischen Dicarbonsäure und einem aliphatischen Diol ist.

4. Thermoplastisches Polyurethan gemäß einem der Ansprüche 1 bis 3, wobei der aromatische Polyester-Block (B1) ein Polyethylenterephthalat-Block oder ein Polybutylenterephthalat-Block ist.

5. Thermoplastisches Polyurethan gemäß einem der Ansprüche 1 bis 4, wobei der aromatische Polyester-Block (B1) ein Polyethylenterephthalat-Block ist.

6. Thermoplastisches Polyurethan gemäß einem der Ansprüche 1 bis 5, wobei das Polyol (P1) ein Molekulargewicht Mw im Bereich von 750 bis 1500 g/Mol aufweist.

7. Thermoplastisches Polyurethan gemäß einem der Ansprüche 1 bis 6, wobei der gemäß (ii) eingesetzte Kettenverlängerer ein Diol mit einem Molekulargewicht Mw < 220 g/mol ist.

8. Thermoplastisches Polyurethan gemäß einem der Ansprüche 1 bis 7, wobei der gemäß (ii) eingesetzte Kettenverlängerer und das in der Polyolzusammensetzung enthaltene Polyol (P1) in einem molaren Verhältnis von 40 zu 1 bis 1 zu 10 eingesetzt werden.

9. Thermoplastisches Polyurethan gemäß einem der Ansprüche 1 bis 8, wobei die Polyolzusammensetzung ein weiteres Polyol ausgewählt aus der Gruppe bestehend aus Polyetherolen, Polyesterolen, Polycarbonatalkoholen und Hybridpolyolen umfasst.

10. Thermoplastisches Polyurethan gemäß einem der Ansprüche 1 bis 9, wobei das Polyisocyanat ein aliphatisches oder aromatisches Diisocyanat ist.

**11.** Thermoplastisches Polyurethan gemäß einem der Ansprüche 1 bis 10, wobei der Hartsegmentanteil im thermoplastischen Polyurethan im Bereich von 10 bis 75% liegt.

**12.** Verfahren zur Herstellung eines Formkörpers (FK) umfassend die folgenden Schritte:

(a) Herstellung eines thermoplastischen Polyurethans umfassend die Umsetzung

(i) mindestens einer Polyisocyanatzusammensetzung;
(ii) mindestens eines Kettenverlängerers; und
(iii) mindestens einer Polyolzusammensetzung,

wobei die Polyolzusammensetzung mindestens ein Polyol (P1) umfasst, das ein Molekulargewicht Mw im Bereich von 500 bis 2000 g/Mol aufweist und mindestens einen aromatischen Polyester-Block (B1) aufweist, wobei der Hartsegmentanteil im thermoplastischen Polyurethan < 75% ist;
(b) Herstellung eines Formkörpers (FK) aus dem thermoplastischen Polyurethan.

**13.** Verfahren gemäß Anspruch 12, wobei der Formkörper (FK) in Schritt (b) mittels Extrusion, Spritzguss, Sinterverfahren oder aus Lösung hergestellt wird.

**14.** Formkörper, erhältlich oder erhalten gemäß einem Verfahren gemäß einem der Ansprüche 1? oder 13.

**15.** Formkörper gemäß Anspruch 14, wobei der Formkörper ein Gebrauchsartikel ist, beispielsweise für Anwendungen wie Zahnbürsten, Rasierer, Gehäuse für Haushaltsartikel, Displays, Teile von Computern oder Telefonen, Stecker, ein Teil für den Automobilinnenausbau, ein Teil von Schuhen, beispielsweise eine Kappe für Sicherheitsschuhe.

**Claims**

**1.** A thermoplastic polyurethane obtainable or obtained by converting at least components (i) to (iii):

(i) a polyisocyanate composition,
(ii) at least one chain extender, and
(iii) at least one polyol composition,

wherein the polyol composition comprises at least one polyol (P1) which has a molecular weight Mw in the range from 500 to 2000 g/mol and has at least one aromatic polyester block (B1), wherein the hard segment content in the thermoplastic polyurethane is < 75%.

**2.** The thermoplastic polyurethane according to claim 1, wherein the polyol (P1) includes 20% to 70% by weight of the aromatic polyester blocks (B1), based on the overall polyester polyol (P1).

**3.** The thermoplastic polyurethane according to claim 1 or 2, wherein the aromatic polyester block (B1) is a polyester of an aromatic dicarboxylic acid and an aliphatic diol.

**4.** The thermoplastic polyurethane according to any of claims 1 to 3, wherein the aromatic polyester block (B1) is a polyethylene terephthalate block or a polybutylene terephthalate block.

**5.** The thermoplastic polyurethane according to any of claims 1 to 4, wherein the aromatic polyester block (B1) is a polyethylene terephthalate block.

**6.** The thermoplastic polyurethane according to any of claims 1 to 5, wherein the polyol (P1) has a molecular weight Mw in the range from 750 to 1500 g/mol.

**7.** The thermoplastic polyurethane according to any of claims 1 to 6, wherein the chain extender used in (ii) is a diol having a molecular weight Mw < 220 g/mol.

8. The thermoplastic polyurethane according to any of claims 1 to 7, wherein the chain extender used in (ii) and the polyol (P1) present in the polyol composition are used in a molar ratio of 40:1 to 1:10.

9. The thermoplastic polyurethane according to any of claims 1 to 8, wherein the polyol composition comprises a further polyol selected from the group consisting of polyetherols, polyesterols, polycarbonate alcohols and hybrid polyols.

10. The thermoplastic polyurethane according to any of claims 1 to 9, wherein the polyisocyanate is an aliphatic or aromatic diisocyanate.

11. The thermoplastic polyurethane according to any of claims 1 to 10, wherein the hard segment content in the thermoplastic polyurethane is in the range from 10% to 75%.

12. A process for producing a shaped body (SC) comprising the following steps:

    (a) preparing a thermoplastic polyurethane comprising the conversion of

        (i) at least one polyisocyanate composition;
        (ii) at least one chain extender; and
        (iii) at least one polyol composition,

    wherein the polyol composition comprises at least one polyol (P1) which has a molecular weight Mw in the range from 500 to 2000 g/mol and has at least one aromatic polyester block (B1),
    wherein the hard segment content in the thermoplastic polyurethane is < 75%;
    (b) producing a shaped body (SC) from the thermoplastic polyurethane.

13. The process according to claim 12, wherein the shaped body (SC) is produced in step (b) by means of extrusion, injection molding or sintering methods or from solution.

14. A shaped body obtainable or obtained by a process according to either of claims 12 and 13.

15. The shaped body according to claim 14, wherein the shaped body is a consumer article, for example for uses such as toothbrushes, razors, housings for domestic articles, displays, computer or phone parts, plugs, an automobile interior trim part, a footwear part, for example a cap for safety footwear.

**Revendications**

1. Polyuréthane thermoplastique, pouvant être obtenu ou obtenu par transformation au moins des composants (i) à (iii) :

    (i) une composition de polyisocyanate,
    (ii) au moins un extenseur de chaînes, et
    (iii) au moins une composition de polyol,

    la composition de polyol comprenant au moins un polyol (P1), qui présente un poids moléculaire Mw dans la plage de 500 à 2 000 g/mole et présente au moins un bloc (B1) de polyester aromatique,
    la proportion de segments durs dans le polyuréthane thermoplastique étant < 75 %.

2. Polyuréthane thermoplastique selon la revendication 1, le polyol (P1) présentant 20 à 70 % en poids de blocs (B1) de polyester aromatique, par rapport au polyesterpolyol (P1) total.

3. Polyuréthane thermoplastique selon la revendication 1 ou 2, le bloc (B1) de polyester aromatique étant un polyester issu d'un acide dicarboxylique aromatique et d'un diol aliphatique.

4. Polyuréthane thermoplastique selon l'une quelconque des revendications 1 à 3, le bloc (B1) de polyester aromatique étant un bloc de poly(téréphtalate d'éthylène) ou un bloc de poly(téréphtalate de butylène).

5. Polyuréthane thermoplastique selon l'une quelconque des revendications 1 à 4, le bloc (B1) de polyester aromatique étant un bloc de poly(téréphtalate d'éthylène).

6. Polyuréthane thermoplastique selon l'une quelconque des revendications 1 à 5, le polyol (P1) présentant un poids moléculaire Mw dans la plage de 750 à 1 500 g/mole.

7. Polyuréthane thermoplastique selon l'une quelconque des revendications 1 à 6, l'extenseur de chaînes utilisé selon (ii) étant un diol doté d'un poids moléculaire Mw < 220 g/mole.

8. Polyuréthane thermoplastique selon l'une quelconque des revendications 1 à 7, l'extenseur de chaînes utilisé selon (ii) et le polyol (P1) contenu dans la composition de polyol étant utilisés en un rapport molaire de 40 sur 1 à 1 sur 10.

9. Polyuréthane thermoplastique selon l'une quelconque des revendications 1 à 8, la composition de polyol comprenant un autre polyol choisi dans le groupe constitué par des polyétherols, des polyesterols, des polycarbonatealcools et des polyols hybrides.

10. Polyuréthane thermoplastique selon l'une quelconque des revendications 1 à 9, le polyisocyanate étant un diisocyanate aliphatique ou aromatique.

11. Polyuréthane thermoplastique selon l'une quelconque des revendications 1 à 10, la proportion de segments durs dans le polyuréthane thermoplastique se situant dans la plage de 10 à 75 %.

12. Procédé pour la préparation d'un corps moulé (FK) comprenant les étapes suivantes :

(a) préparation d'un polyuréthane thermoplastique comprenant la transformation

(i) d'au moins une composition de polyisocyanate ;
(ii) d'au moins un extenseur de chaînes ; et
(iii) d'au moins une composition de polyol, la composition de polyol comprenant au moins un polyol (P1), qui présente un poids moléculaire Mw dans la plage de 500 à 2 000 g/mole et présente au moins un bloc (B1) de polyester aromatique,

la proportion de segments durs dans le polyuréthane thermoplastique étant < 75 % ;
(b) préparation d'un corps moulé (FK) à partir du polyuréthane thermoplastique.

13. Procédé selon la revendication 12, le corps moulé (FK) étant préparé à l'étape (b) au moyen d'une extrusion, d'un moulage par injection, d'un procédé de frittage ou à partir d'une solution.

14. Corps moulé, pouvant être obtenu ou obtenu selon un procédé selon l'une quelconque des revendications 12 et 13.

15. Corps moulé selon la revendication 14, le corps moulé étant un article d'usage, par exemple pour des applications comme des brosses à dents, des rasoirs, des boîtiers pour des articles ménagers, des affichages, des pièces d'ordinateurs ou de téléphones, des prises, une pièce pour l'aménagement intérieur automobile, une pièce pour chaussures, par exemple une coque pour chaussures de sécurité.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5574092 A
- US 5627254 A
- WO 2015063062 A1
- US 4186257 A
- WO 2007118827 A1

**In der Beschreibung aufgeführte Nicht-Patentliteratur**

- Kunststoffhandbuch, Band 7, Polyurethane. Carl Hanser Verlag, 1993, vol. 7
- Geeignete Hilfs- und Zusatzstoffe können beispielsweise dem Kunststoffhandbuch, Band VII, herausgegeben von Vieweg und Höchtlen. Carl Hanser Verlag, 1966, vol. III, S103-113
- Kunststoffhandbuch, Band 7, ''Polyurethane. Carl Hanser Verlag, 1993, vol. 7
- Kunststoffhandbuch. Carl Hanser Verlag, 1966, vol. 7, 103-113